# FASCICULE DE BREVET EUROPEEN

(11) **EP 1 851 454 B1**
(45) Date de publication et mention de la délivrance du brevet: **26.11.2014**
(21) Numéro de dépôt: 06709526.5
(22) Date de dépôt: 20.02.2006
(51) Int. Cl.: F16C 33/10, F16C 33/12

(54) **PROCÉDÉ DE TRAITEMENT D'UNE ENSEMBLE D'ARTICULATION GRAISSÉ**
BEARBEITUNG EINES MIT FETT GESCHMIERTEN DREHGELENKS
PROCESS FOR SURFACE TREATMENT OF A JOINT ASSEMBLY PROVIDED WITH GREASE

(30) Priorité: 21.02.2005 FR 0550475
(43) Date de publication de la demande: 07.11.2007
(73) Titulaire: H.E.F., 42160 Andrézieux-Bouthéon (FR)
(72) Inventeur: BARLERIN, Jean-claude, F-42170 Saint-Just-Saint-Rambert (FR); CHADUIRON, Eric, F-42140 Viricelles (FR)
(74) Mandataire: Thivillier, Patrick
(86) Numéro de dépôt international: PCT/FR2006/050147
(87) Numéro de publication internationale: WO 2006/087499

(56) Documents cités:
- EP-A- 1 092 886
- US-A- 4 120 544
- US-A- 4 558 960
- US-A- 4 620 803
- US-A- 5 683 183
- US-B1- 6 589 412

## Description

L' invention concerne le domaine technique des transports, notamment les articulations fonctionnant en régime onctueux pour tringlerie de freins de bogies.

Pour ce type d'articulations, selon l'état antérieur de la technique, le domaine ferroviaire utilise des paliers lisses sous forme de bagues en acier trempé superficiellement et coopérant avec des axes eux-mêmes en acier trempé superficiellement. Un graissage est réalisé uniquement au montage. Or, il est apparu que ces articulations présentent, après plusieurs mois de fonctionnement, des problèmes de blocage dus à des phénomènes de grippage ou de corrosion entraînant des pertes d'efficacité du freinage. Il peut en résulter également une usure asymétrique de certains éléments constitutifs de l'ensemble de freinage, par exemple au niveau des plaquettes de friction.

C'est ainsi que l'on a pu observer qu'au bout de 800.000 kilomètres, les articulations des tringleries de freins de bogies d'une rame de TGV® présentent des problèmes de blocage dus à la corrosion et au grippage.

Le document DE 2018204 A1 décrit un ensemble d'articulation gainé comprenant un axe monté tournant dans une bague et présentant des agencements faisant office de réserve de graisse.

Ce document ne propose pas un traitement de surface pour réduire les phénomènes de corrosion et de grippage.

Le document US 6,589,412 décrit un procédé de sulfuration qui est connu par l'homme du métier pour détériorer une tenue anticorrosion.

L'invention s'est fixée pour but de remédier à ces inconvénients d'une manière simple, sûre, efficace et rationnelle.

Le problème que se propose de résoudre l'invention est de surmonter, d'une manière significative, les phénomènes de grippage et de corrosion d'un ensemble d'articulation, fonctionnant en régime de lubrification du type onctueux, en ce sens que lesdites articulations fonctionnent uniquement sous fortes charges avec des mouvements oscillants de faible vitesse, et sont graissées.

L'ensemble d'articulation est du type de ceux comprenant, d'une manière connue, un axe monté tournant dans une bague. Une application avantageuse concerne le domaine technique des tringleries de freins de bogies, comme il ressort de la première partie de la revendication 1.

Ce problème technique est résolu par les caractéristiques définies dans la deuxième partie de la revendication 1.

A noter que ce type d'articulation est parfaitement connu par l'homme du métier dans d'autres domaines d'application. Toutefois, l'homme du métier n'est pas incité à utiliser ce type de bagues qui sont conçues pour être regraissées à intervalles réguliers, alors que, dans une application ferroviaire, le cahier des charges impose un seul graissage au moment du montage.

Les résultats obtenus sont surprenants étant donné que des tests comparatifs effectués à titre confidentiel, ont montré que les tringleries de freins de bogies de TGV® équipées d'un ensemble d'articulations selon les caractéristiques de l'invention, ont permis de parcourir 1.300.000 kilomètres, sans aucune trace de micro-grippage et de corrosion.

A partir de cette conception de base de l'ensemble d'articulations, différentes formes de réalisation peuvent être envisagées, au niveau notamment des agencements aptes à faire office de réserves de lubrifiant. Ainsi, ces agencements peuvent être constitués par des trous, des alvéoles, des rainures formant un quadrillage ou des chevrons.

Avantageusement et de manière non limitative, ces agencements aptes à faire office de réserves de lubrifiant, sont disposés entre des gorges formées à chacune des extrémités de l'alésage de la bague. Dans ce cas, lorsque les agencements sont constitués par des rainures, ces dernières sont en communication avec l'une des gorges au moins.

A titre de réalisation préférentielle mais non limitative, l'invention est exposée ci-après plus en détail à l'aide des figures des dessins annexés dans lesquels :
- la figure 1 montre un exemple d'application de l'ensemble d'articulations selon l'invention, à une tringlerie de freins de bogies, notamment de freins à disque ;
- la figure 2 est une vue de côté correspondant à la figure 1 ;

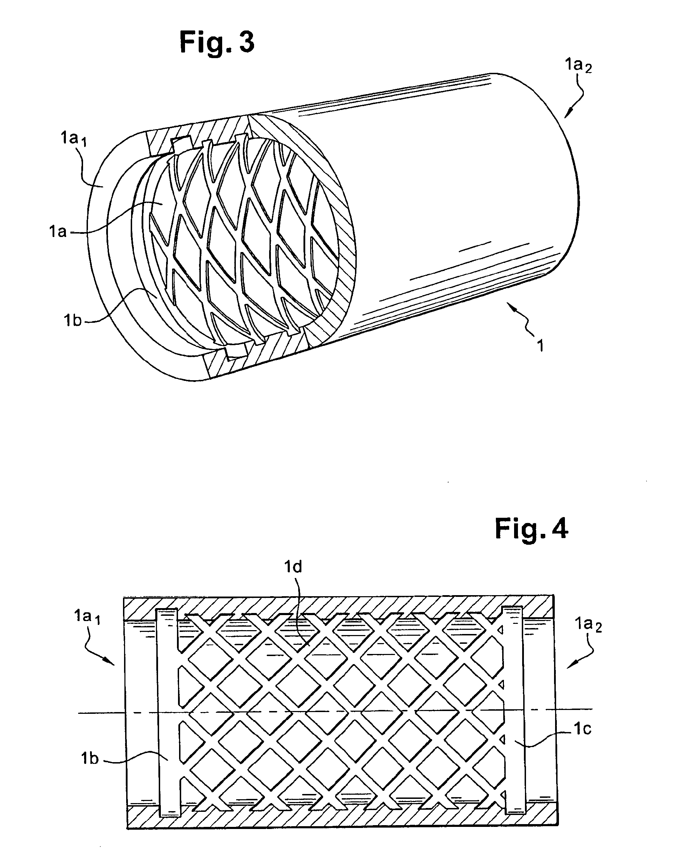

- la figure 3 est une vue en perspective, avec coupe partielle, d'une forme de réalisation de la bague d'articulation selon l'invention ;
- la figure 4 est une vue en coupe longitudinale de la bague ;
- la figure 5 est une vue correspondant à la figure 4, après montage de l' axe ;
- les figures 6, 7, 8 et 9 sont des vues partielles en coupe montrant, à titre d'exemples, différents profils en fond de gorge.

L'ensemble d'articulation selon l'invention est composé d'une bague (1) et d'un axe (2). Comme indiqué, cet ensemble d'articulation trouve une application particulièrement avantageuse dans le domaine ferroviaire notamment pour les tringleries de freins de bogies.

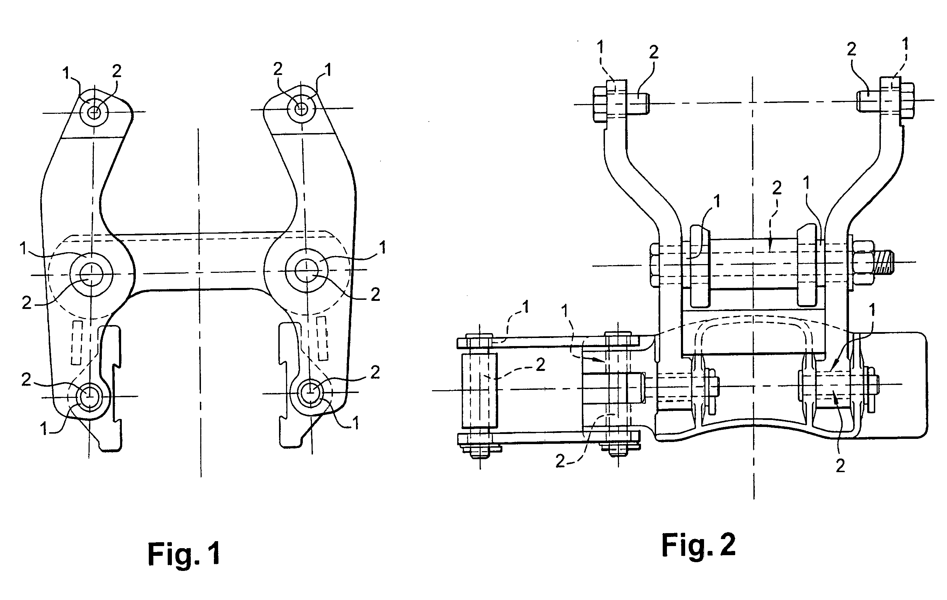

Dans l'exemple illustré aux figures 1 et 2, la tringlerie de freins comprend plusieurs ensembles d'articulations composés d'une bague (1) et d'un axe (2).

Selon l'invention, la bague (1) et/ou l'axe (2) sont soumis à un traitement de durcissement de diffusion ou par transformation structurale, suivi d'un traitement de finition et d'un traitement apte à réduire la tendance au grippage et à réduire la sensibilité à la corrosion.

Par exemple, le traitement de durcissement de diffusion est du type nitruration, nitrocarburation, carbonitruration, cémentation. De la même manière, le traitement de durcissement par transformation structurale peut être choisi parmi les procédés de trempe superficielle.

Le traitement de finition est, par exemple, une réaction superficielle d'oxydation ou de phosphatation. Quant au traitement apte à réduire la tendance au grippage et à réduire la sensibilité à la corrosion, ce dernier peut consister en une couche de polymère contenant ou non un lubrifiant solide notamment du graphite, du bisulfure de Molybdène ou du PTFE. A noter également que le traitement de finition peut être suivi d'une imprégnation d'huile soluble ou entière.

Selon l'invention, en combinaison avec ces différents traitements, l'alésage (1a) de la bague (1) et/ou l'axe (2) présente des agencements aptes à faire office de réserve à la graisse.

Différentes solutions techniques peuvent être envisagées. Par exemple et de façon non limitative, ces agencements sont constitués par des trous ou alvéoles formées dans l'épaisseur de la bague au niveau de l'alésage (1a). Ou bien, ces agencements sont constitués par des rainures (1d) convenablement orientées pour former un quadrillage (figures des dessins) où des chevrons jointifs ou non au niveau de leur sommet.

D'une manière avantageuse et non limitative, ces agencements, quelle soit leur forme de réalisation, sont disposés au moins entre des gorges (1b) et (1c) formées à chacune des extrémités (1a1) et (1a2) de l'alésage (1a) de la bague (1).

Dans le cas de rainures (1d), ces dernières sont en communication avec l'une au moins des gorges (1b) ou (1c).

Les gorges (1b) et (1c) sont conformées pour éviter à la graisse ou autre lubrifiant de sortir de la surface de frottement.

A titre indicatif nullement limitatif, la profondeur des gorges (1b) et (1c) peut être comprise entre 0, 3 et 3 mm environ. Plus généralement, la profondeur des gorges (1b) et (1c) est, au plus, égale à sensiblement le tiers de l'épaisseur du corps (1).

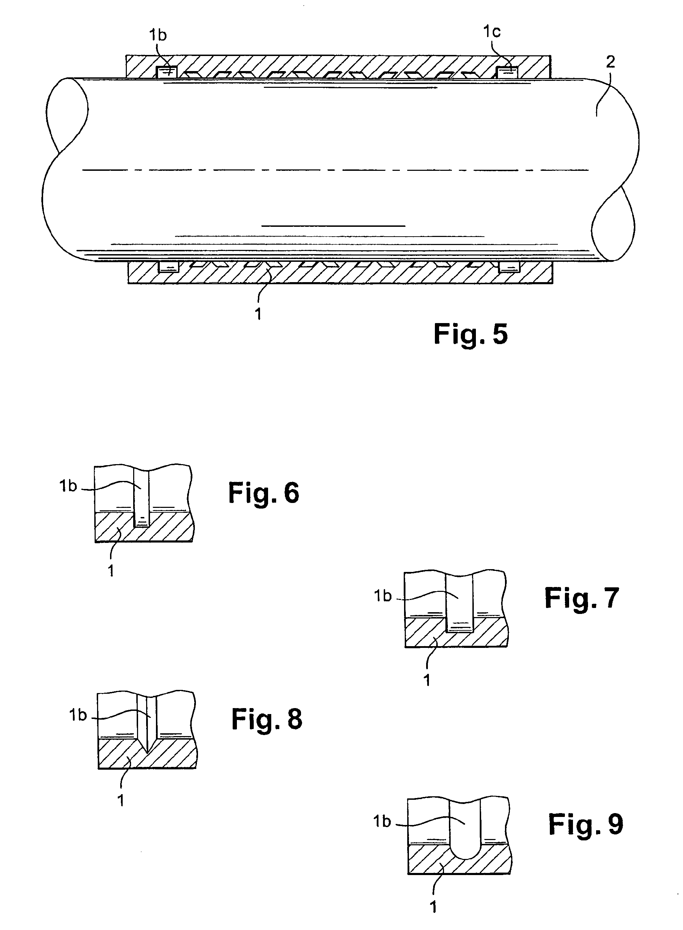

Le profil des gorges peut présenter différentes formes, notamment carrée (figure 6), rectangulaire (figure 7), triangulaire (figure 8), ronde (figure 9), en étant chanfreinée ou non.

Compte tenu du problème posé à résoudre d'éviter à la graisse de sortir de la surface de frottement, les gorges (1b) et (1c) sont positionnées à une distance, de chacune des extrémités (1a1) et (1a2) de l'alésage, comprise entre 1 et 6 mm environ. De même, la largeur des gorges (1b) et (1c) est comprise entre 0,5 et 5 mm environ.

Compte tenu de la combinaison des gorges (1b) et (1c) et des rainures (1d), il en résulte que lesdites gorges en communication avec lesdites rainures permettent d'éviter l'évacuation du lubrifiant contenu au niveau de la zone délimitée par lesdites rainures (1d), les gorges faisant également office de réserve de graisse pour réapprovisionner ces rainures.

La profondeur des gorges (1b) et (1c) est d'environ 1 à 10 fois supérieure à la profondeur des rainures (1d). Les rainures (1d) délimitent une zone (chevrons ou quadrillage, par exemple) représentant environ 30 à 70 % de la zone de frottement.

Comme indiqué, ces ensembles d'articulation trouvent une application avantageuse dans le domaine de tringleries de freins de bogies, avec uniquement un graissage au montage.

Les avantages ressortent bien de la description, en particulier on renvoie aux tests comparatifs effectués qui montrent que, selon l'invention, après un parcours de 1.300.000 kilomètres, le système tringleries des freins de boggies ne présentent pas de phénomènes de grippage ou de corrosion, alors que selon l'état antérieur de la technique, au bout de 800.000 kilomètres, des phénomènes de grippage et de corrosion apparaissent.

## Revendications

1. Procédé de traitement d'un ensemble d'articulation graissé fonctionnant en régime onctueux pour tringlerie de freins de bogies et comprenant un axe (2) monté tournant ou oscillant dans une bague (1) procédé selon lequel on réalise dans l'alésage de la bague et/ou sur l'axe des agencements aptes à faire office de réserve à la graisse, **caractérisé par le fait qu'**on soumet l'axe (2) et/ou la bague (1) à un traitement de durcissement de diffusion ou par transformation structurale suivi d'un traitement de surface de finition et d'un traitement apte à réduire la tendance au grippage et à réduire la sensibilité à la corrosion.

2. Procédé selon la revendication 1, **caractérisé en ce que** les agencements aptes à faire office de réserve à la graisse sont constitués par des trous ou alvéoles.

3. Procédé selon la revendication 1, **caractérisé en ce que** les agencements aptes à faire office de réserve à la graisse sont constitués par des rainures (1d).

4. Procédé selon la revendication 3, **caractérisé en ce que** les rainures (1d) forment un quadrillage.

5. Procédé selon la revendication 3, **caractérisé en ce que** les rainures (1d) forment des chevrons.

6. Procédé selon la revendication 1, **caractérisé en ce que** les agencements aptes à faire office de réserve à la graisse sont disposés au moins entre des gorges (1b) et (1c) formées à chacune des extrémités de l'alésage (1a) de la bague (1).

7. Procédé selon la revendication 1, **caractérisé en ce que** les agencements aptes à faire office de réserve à la graisse sont constitués par des rainures (1d) disposées sur l'axe (2) et en communication avec des gorges (1b) et (1c) formées à chacune des extrémités de l'alésage (1a) de la bague (1).

## Patentansprüche

1. Behandlungsverfahren einer gefetteten Artikulationsstruktur, die in öligem Betrieb arbeitet, für ein Gestänge von Drehgestellbremsen und umfassend eine Achse (2), die drehend oder schwingend in einem Ring (1) montiert ist und nach dem in der Bohrung des Rings und / oder auf der Achse Anordnungen realisiert sind, die geeignet sind, als Reserve für das Fett zu dienen, **gekennzeichnet durch** die Tatsache, dass die Achse (2) und / oder der Ring (1) einer Diffusions-Härtungsbehandlung oder per struktureller Transformation, gefolgt von einer Endbearbeitung der Oberflächenbehandlung oder einer Bearbeitung unterzogen wird, die geeignet ist, die Tendenz zum Festfressen zu reduzieren und die Empfindlichkeit gegenüber Korrosion zu verringern.

2. Verfahren gemäß Anspruch 1, **dadurch gekennzeichnet, dass** die Anordnungen, die geeignet sind, als Reserve für das Fett zu dienen, aus Löchern oder Waben gebildet werden.

3. Verfahren gemäß Anspruch 1, **dadurch gekennzeichnet, dass** die Anordnungen, die geeignet sind, als Reserve für das Fett zu dienen, aus Rillen (1d) gebildet werden.

4. Verfahren gemäß Anspruch 3, **dadurch gekennzeichnet, dass** die Rillen (1d) ein Flächenraster bilden.

5. Verfahren gemäß Anspruch 3, **dadurch gekennzeichnet, dass** die Rillen (1d) Zickzack-Muster bilden.

6. Verfahren gemäß Anspruch 1, **dadurch gekennzeichnet, dass** die Anordnungen, die geeignet sind, als Reserve für das Fett zu dienen, wenigstens zwischen Auskehlungen (1b) und (1c) angeordnet sind, die an jedem Ende der Bohrung (1a) des Rings (1) gebildet sind.

7. Verfahren gemäß Anspruch 1, **dadurch gekennzeichnet, dass** die Anordnungen, die geeignet sind, als Reserve für das Fett zu dienen, durch Rillen (1d) gebildet sind, die auf der Achse (2) und in Verbindung mit Auskehlungen (1b) und (1c) angeordnet sind, die an jedem Ende der Bohrung (1a) des Rings (1) gebildet sind.

## Claims

1. Method for treating a greased joint hinge unit, functioning in a boundary lubrication mode for the linkage of the brakes of bogies and comprising a fixed axle (2) rotating or oscillating in a bushing (1), a procedure according to which fixtures capable of acting as grease reserves are created on the bushing bore and/or on the axle, **characterised by** the fact that the axle (2) and/or the bushing (1) is subject to a diffusion or structural transformation hardening treatment, followed by a finish surface treatment and a treatment that is capable of reducing the seizing tendency as well as the sensitivity to corrosion.

2. Method according to claim 1, **characterised in that** the fixtures capable of acting as grease reserves consist of holes or cells.

3. Method according to claim 1, **characterised in that** the fixtures capable of acting as grease reserves consist of grooves (1d).

4. Method according to claim 3, **characterised in that** the grooves (1d) form a grid pattern.

5. Method according to claim 3, **characterised in that** the grooves (1d) form a herringbone pattern.

6. Method according to claim 1, **characterised in that** the fixtures capable of acting as grease reserves are at least placed between the lots (1b) and (1c) that are formed at each of the ends of the bore (1a) of the bushing (1).

7. Method according to claim 1, **characterised in that** the fixtures capable of acting as grease reserves consist of grooves (1d) arranged on the axle (2) and in communication with the slots (1b) and (1c) that are formed at each end of the bushing (1) bore (1a).
